# EUROPEAN PATENT SPECIFICATION

(11) **EP 3 872 736 B1**
(45) Date of publication and mention of the grant of the patent: **09.12.2026**
(21) Application number: 20159428.0
(22) Date of filing: 25.02.2020
(51) Int. Cl.: G06Q 40/02

(54) **SYSTEM AND METHOD FOR PROVIDING UNIFIED ACCESS AND MONITORING PERFORMANCE OF SERVICE PROVIDERS**
SYSTEM UND VERFAHREN ZUR BEREITSTELLUNG EINER EINHEITLICHEN ZUGANGS- UND ÜBERWACHUNGSLEISTUNG VON DIENSTANBIETERN
SYSTÈME ET PROCÉDÉ POUR FOURNIR UN ACCÈS UNIFIÉ ET SURVEILLER LA PERFORMANCE DE FOURNISSEURS DE SERVICES

(43) Date of publication of application: 01.09.2021
(73) Proprietor: Mastercard International Incorporated, Purchase NY 10577 (US)
(72) Inventor: CLARK, Michael, Woking, Surrey GU22 9FB (GB)
(74) Representative: Gill Jennings & Every LLP

(56) References cited:
- US-A1- 2019 347 115
- US-B2- 10 331 505

## Description

### Field of Invention

The present invention relates to a technique for providing unified access to multiple service providers. Specifically, it relates to accessing and monitoring the performance of the service providers though a single interface.

### Background

Increasingly, more and more service providers such as banks, utilities providers, retail merchants, etc. are providing their services online. This is not only convenient for both the services providers and their customers, but is also cost-effective. As the customers often use services from multiple service providers, there exists third party providers which enable the customers to access multiple service providers using a single online application. However, for this to happen, the service providers must provide access to their systems to these third party providers. In other words, the service providers must open their internal systems to be accessed by such external entities.

One example of such an ecosystem is Open Banking. Open Banking is growing rapidly globally and several third party providers are offering innovative platforms based on open banking. Whilst this provides greater choice for the customers, financial institutions such as banks which provide the data to such providers, their APIs (Application Programming Interface) have different levels of maturity and the performance is unpredictable. This often leads to poor customer experience and eventually the customers move away from such Open Banking services.

US 10331505 B2 discloses a hub connecting a client to multiple third party services.

Moreover, in existing systems, the third party providers have no real-time visibility of the performance of the APIs. They only get to know that a particular service provider is unavailable online when an error message is received. This becomes a bigger problem when the third party providers starts to access data from service providers globally, as they then need to engage with the providers in other markets and deal with unknown issues responsible for API's unavailability.

Therefore, there is a need for providing a system that can address the issues highlighted above and contribute to the growth and success of Open Banking and similar ecosystems globally.

### Summary of the Invention

According to an aspect of the invention, there is provided a system for providing unified access to a plurality of service providers, the system, which is defined in claim 1, comprising a user application configured to connect a user to the service providers for accessing one or more services; and a connectivity hub configured to enable the user application to obtain availability status of the service providers, wherein the connectivity hub comprises an application interface configured to process a status request from the user application and route it to a connection partner, and the connection partner is configured to receive status updates from the service providers.

Advantageously, such a system enables users to connect to multiple service providers seamlessly through a single interface and reduces burden on infrastructure, device and network resources. Moreover, with the knowledge of the availability status of the service providers, it is possible to improve the quality of service and enhance the user experience. Preferably, the connectivity hub further comprises a performance module configured to collate the status updates received from the service providers and generate an interactive performance dashboard.

Advantageously, it is possible to combine status updates from all the service providers in a single user-friendly format and provide a holistic view of the service providers globally to regulators and other clients.

Preferably, the performance dashboard comprises real-time availability and planned outages for the service providers.

Advantageously, it is possible to get up-to-date information on the service providers and plan ahead for any outages and deliver an enhanced user experience.

Preferably, the performance dashboard comprises a list of locations sorted by aggregate availability of all service providers in respective locations.

Preferably, the connectivity hub is configured to provide access to the performance dashboard to premium clients and/or to regulators associated with the one or more service providers.

The connection partner is further configured to send status of the service providers to the application interface.

The user application is configured to deactivate the service providers on the list that are currently unavailable based on the status received from the application interface.

The service providers are one or more of financial institutions, utility services, public services, retail merchants, travel services, social media platforms, regulated and unregulated third-party providers.

According to another aspect of the invention, there is provided a method of providing unified access to a plurality of service providers, the method being defined in claim 6.

Preferably, the method comprises collating the status updates received from the service providers and generating an interactive performance dashboard.

Preferably, the method comprises providing access to the performance dashboard to premium clients and/or to regulators associated with one or more of the service providers. Preferably, the method comprises sending an availability status of the service providers through the application interface so as to allow a user to access a service from one or more of the available service providers.

Preferably, the method comprises sending a performance update to the service providers.

According to another aspect of the invention, there is provided a connectivity hub for providing unified access to a plurality of service providers comprising a memory; a communication interface; and one or more processors for implementing the above described method.

### Brief Description of the Drawings

Embodiments of the present invention are described below, by way of example only, with reference to the accompanying drawings, in which:
Fig. 1 is a schematic diagram of a system capable of implementing the invention and in accordance with an aspect of the invention;
Fig. 2 is a block diagram showing communication between various entities in an exemplary Open Banking ecosystem based on the system of Fig. 1;
Figs. 3A-3C are graphical user interfaces from a performance dashboard generated by a connectivity hub included in the system of Figs. 1 and 2;
Fig. 4 shows a flow diagram setting out a method in accordance with an aspect of the invention; and
Fig. 5 shows in schematic form a data processing device that is suitable for performing the functions of any data processing device within the system shown in Figs. 1 and 2.

### Detailed Description

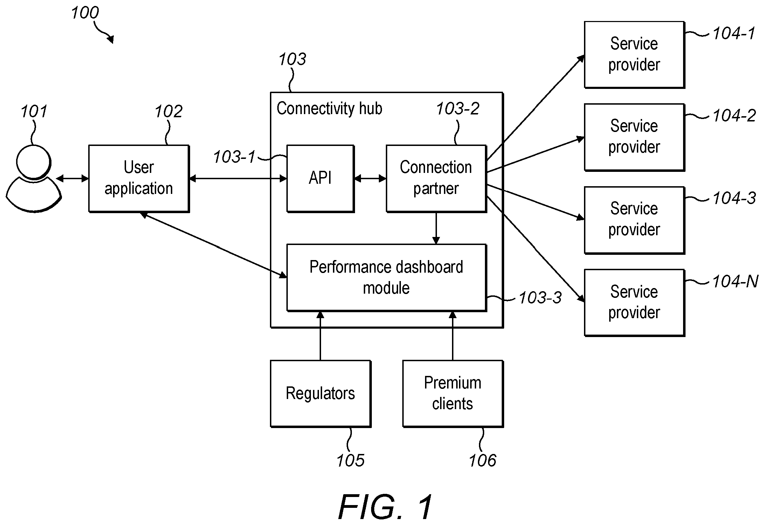

Fig. 1 shows a system 100 comprising a user 101, a user application 102, a connectivity hub 103, a plurality of service providers 104-1 to 104-N (collectively referred to as service providers 104), regulators 105, and premium clients 106. In one embodiment, the user 101 accesses the user application 102 installed on a user computing device (not shown) such as a smartphone, tablet, or a personal computer. The user application 102 is an application hosted and managed by a third-party provider that can provide access to the service providers 104. The user application 102 is preferably built to be compatible with various platforms and operating systems such as Android^{®}, iOS^{®}, Windows^{®}, etc.

Typically, the user application 102 connects with each of the service providers 104 via their respective APIs. However, in the present invention, the user application 102 connects to the service providers 104 via the connectivity hub 103. A third-party provider of the user application 102 is a customer of the connectivity hub 103 and may use the services of the connectivity hub 103 for multiple applications, similar to the user application 102, to access various service providers in different sectors. The connectivity hub 103 acts as an interface between the user application 102 and the service providers 104. The connectivity hub 103 provides the user application 102 with a unified single access to a number of service providers 104 globally without requiring the user application102 to seek individual access from each service provider. This allows the user 101 to access services of a large number of service providers without having to install different applications for accessing different service providers.

In the present embodiment, the connectivity hub 103 comprises an API 103-1, a connection partner 103-2, and a performance dashboard module 103-3. The API 103-1 is an interface that allows the user application 102 to connect and communicate with the connectivity hub 103. The API 103-1 is connected to the connection partner 103-2 and is configured to map and route messages from the user application 102 to the one or more service providers 104. It is to be understood that the API 103-1 is compatible with various user applications and platforms. The implementation and working of such APIs is well-known in the art and is understood by the skilled person.

The connection partner 103-2 is a trusted provider that connects the connectivity hub 103 with the service providers 104. The connection partner 103-2 is configured to seek status updates and send requests received from the user 101 via the user application 102 to the service providers 104. The connection partner 103 is preferably a globally connected entity that has got access to the respective APIs of the service providers 104. The connection partner 103-2 is further configured to covert the received requests in a single format for the service providers 104 regardless of the geographical location and standards. For example, the format of a request received for a service provider based in the UK may be different for that based in the US and a generated response may also be in a different format. The connection partner 103-2 translates both the request and the response in a format that is compatible with the API 103-1 and the user application 102.

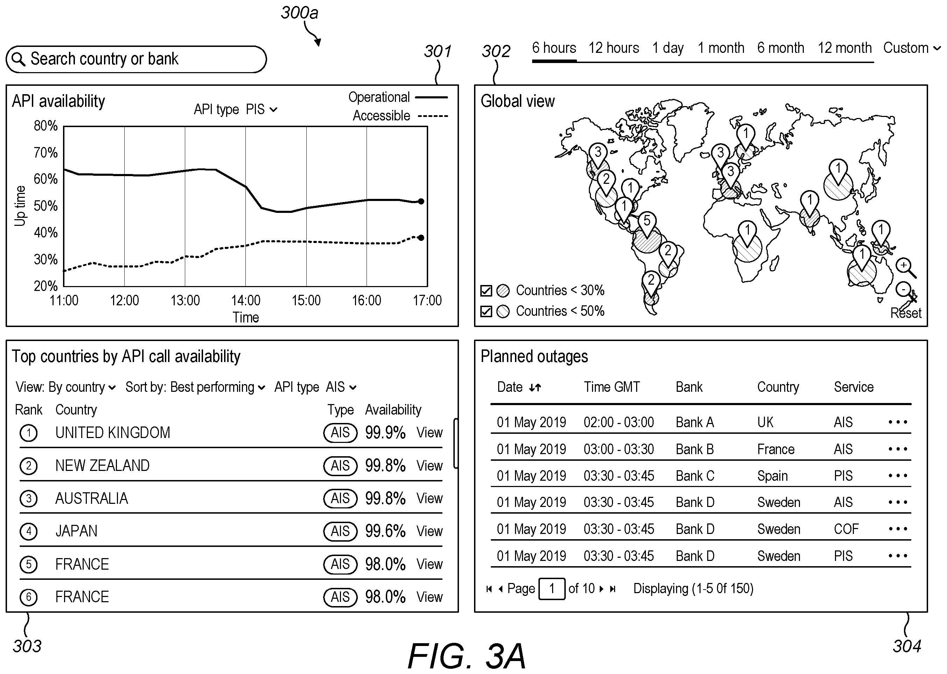

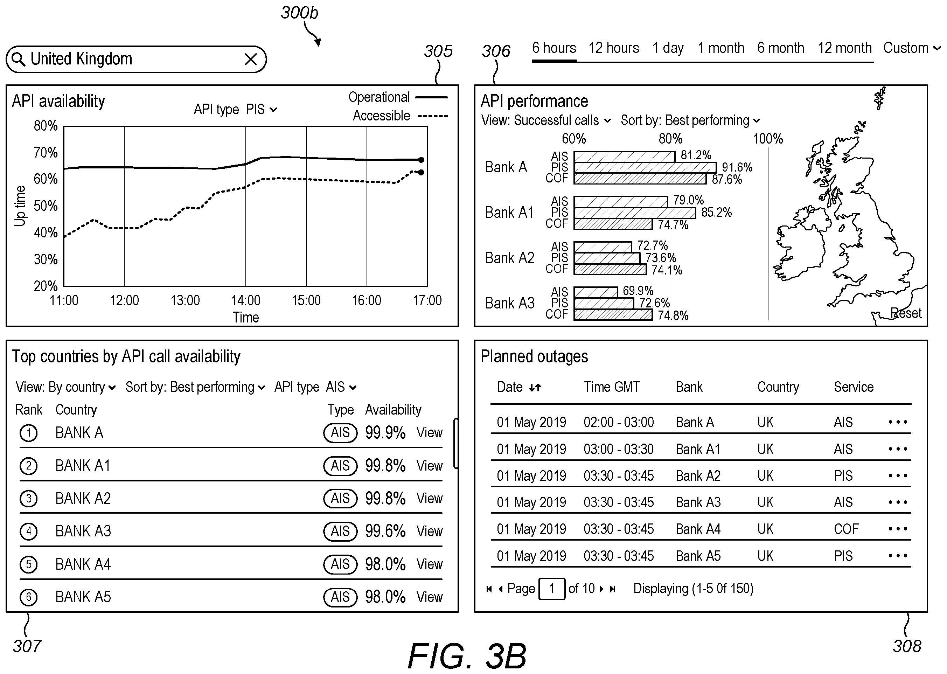

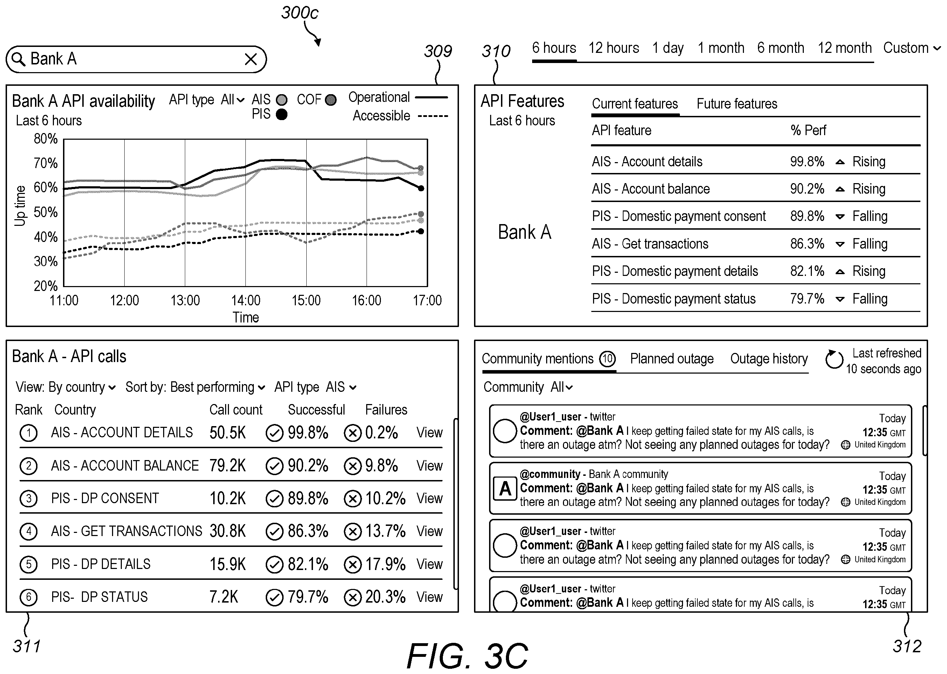

The performance dashboard module 103-3 included in the connectivity hub 103 is configured to generate a performance dashboard based on the status updates received from the service providers 104. The performance dashboard is essentially a holistic view of the APIs health of the service providers 104. The performance dashboard module 103-3 analyses the information received from the service providers 104 and preferably generates a number of graphs, tables, and other user-friendly charts on the performance dashboard. The performance dashboard is preferably interactive and allows a user to drill down into it to get detailed information on the service providers. The performance dashboard is explained further below with reference to Figs. 3A-3C.

The service providers 104 can be private or public entities offering any kind of consumer services to the users. For example, service providers can be banks, insurance and pension providers, and other financial services providers; electricity, gas, water, and other utilities suppliers; TV, mobile, broadband service providers; social media platforms; travel and leisure services; retail merchants; and other business that are able to offer or manage their services online. The service providers 104 must be willing to allow the third party providers such as the user application 102 and/or the connection partner 103-2 to access their internal systems.

The regulators 105 are regulatory bodies that regulates or monitors the conduct of the service providers 104. Such regulatory bodies exist for most service industries such as banks and other financial institutions, legal services, etc. Currently, such regulators do not a holistic view of all the service providers they regulate and are reliant on these service providers to provide updates individually. In the present invention, the regulators 105 are provided access to the performance dashboard generated by the performance dashboard module 103-3 to keep a check on the quality of service offered by the service providers 104. In this way, the regulators 105 can be provided with transparency which could help in operating the ecosystem of such services more efficiently and ultimately in growing it further. However, it is to be understood that the regulators for service providers in different locations may only be provided access to the performance dashboard for the service providers based in their respective location.

The premium clients 106 are customers of the connectivity hub 103 which subscribe to the performance dashboard. A company that manages the user application 102 could be a premium client, for example. By getting a detailed view of the performance of the service providers 104, the company may be able to adapt the user application 102 to better serve their customers, such as the user 101, and improve the overall user experience.

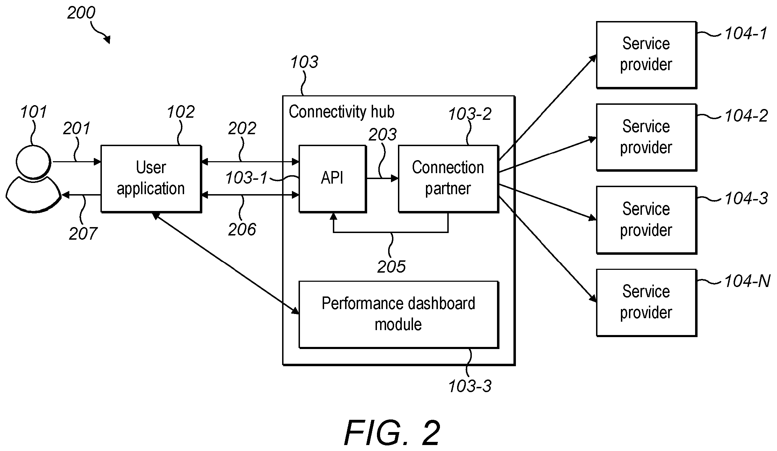

Fig. 2 shows an Open Banking system 200, similar to the system 100, for accessing a service from a service provider 104-1. In one embodiment, the user 101 launches the user application 102 on his or her personal computing device such as a mobile phone to submit a user request through the path 201 to access a service. For example, the user may wish to transfer money to another account using a banking interface on the user application 102. The user application 102 may be an open banking-enabled application that can connect the user 101 to multiple banks through a common user interface. Therefore, the user need not install multiple applications for different banks. When the user request is received, the user application 102 pulls a list of banks, which maybe the most popular banks for that location or most popular banks globally. However, the user application 102 may also provide access to lesser known or niche banks.

The user application 102 is configured to send an availability request through the path 202 to the connectivity hub 103 via the API 103-1. In the availability request, the user application 202 essentially requests the connectivity hub 103 to provide an availability status of all the banks on the list. The user application 102 does not need to have direct access to the APIs of the banks but can access them indirectly via a single interface on the connectivity hub 103.

The API 103-1 maps and routes the availability request to the connection partner 103-2 through the path 203. The connection partner 103-2 has access to the APIs of a number of banks globally, including those presented to the user 101 by the user application 102. The connection partner 103-2 receives status updates from those banks in their respective local formats. The connection partner 103-2 then collates and translates these updates into a standardized format and sends them to the API 103-1 through the path 205. The API 103-1 then sends the availability status of the banks to the user application 102 through the path 206.

Upon receiving the availability stratus of the banks, the user application 102 identifies the unavailable banks and deactivates them on the list on its user interface. This may be done in a number of ways, for example, by greying out the names of the unavailable banks, by having a cross against them, or listing them separately under unavailable tag. By doing so, the user 101 is made aware of unavailable banks before initiating a service request such as transferring money. This reduces the chances of receiving an error message and thus improves the user experience.

The user 101 can then select from one of the available banks on the list and request a service from a chosen bank using the user application 102. As explained above, the user application 102 fulfills the service request from the user 101 by connecting with the connectivity hub 103. The service request in any format can be processed and the user is provided with similar or rather enhanced experience as with direct banking application. In this way, global access to multiple banks in an open banking ecosystem is provided with minimized chances of failed service requests. The connectivity hub 103 may also inform the service providers when their APIs are unavailable and thus help them improve their service.

Fig. 3A shows a first graphical user interface (GUI) 300a on a performance dashboard generated by the performance dashboard module 103-3. In the present example, the performance dashboard is generated for various banks (service providers) participating in a global open banking ecosystem. Based on the information and status updates received from the banks, the performance dashboard module 103-3 generates four charts in the first GUI 300a which provides a high level performance status of the banks in real-time from a global viewpoint. It may also be allow a user to view the performance status over an extended period of time such as for a day, a month, or a year.

The first GUI 300a shows the real-time performance status for the last 6 hours. In chart 301, a graph shows average API availability of all the banks. With time on the X-axis and uptime percentage on the Y-axis, it is possible to view the overall performance of banks' APIs globally. It may also be possible to show operational uptime and accessible uptime on the graph separately as depicted by solid line and dashed line respectively. In chart 302, a global view of locations of various banks are shown on a world map. In chart 303, a ranking of countries is shown based on the percentage of API availability of the banks. In chart 304, a list of planned outages is shown for various banks. The list includes the date, time, name of the bank, location, and the type of service that is scheduled to be down in future.

As the performance dashboard has various levels of granularity, the user may drill down into the GUI 300a to see details for a specific country. A second GUI 300b is generated when the user clicks on a specific country 303, in this example, United Kingdom. The second GUI 300b is also arranged in four charts. Chart 305 shows average API availability of the banks in the UK, similar to the chart 301 in the first GUI 300a. Chart 306 shows individual API performance of various services offered by all the banks in the UK. Chart 307 shows a list of all the banks in the UK ranked by their API performance for a specific type of service. Chart 308 shows a list of planned outages for the banks in the UK, similar to the chart 304 in the GUI 300a.

The user may drill down further to see performance details of a specific bank. As shown in third GUI 300c, performance details of an exemplary 'Bank A' in the UK is depicted in four charts. In chart 309, API availability graph of various services provided by Bank A is drawn. In chart 310, detail of various API features for the bank's services is shown along with their respective performance ratings. In chart 311, all API services are listed and sorted by performance. In chart 312, social media tab shows real-time user comments on social media platforms about the issues with the bank's APIs.

With all such information available on the performance dashboard, it is possible for the regulators 105 to closely monitor the performance of the banks and for the premium clients 106 to provide better service to their customers.

It is to be understood that the performance dashboard and the GUIs shown in the Figs. 3A-3C and as described above are exemplary and may be modified in accordance with the industry and clients' requirements. For example, a dashboard generated for broadband service providers will be different from that for the banks. Also, the dashboard layout, terminology, and design may be changed as per the requirements and specific implementation.

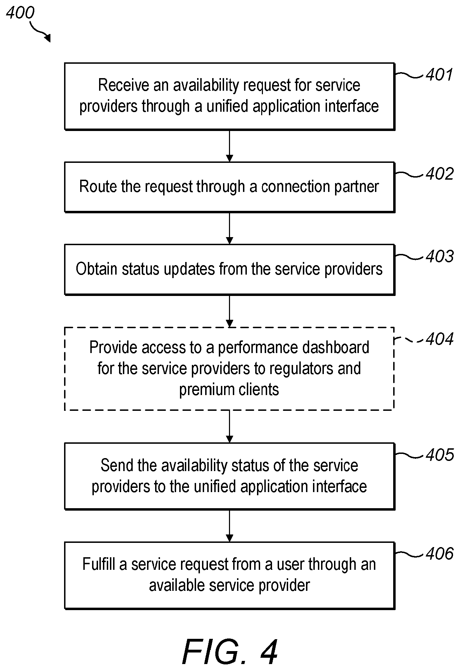

Fig. 4 shows a method 400 for providing unified access to a plurality of service providers. It is to be understood that the method 400 is primality described with reference to the open banking ecosystem but is applicable across various industries or sectors.

At step 401, an availability request for service providers is received through a unified application interface. In the present example, the user 102 launches the user application 102 on his or her personal computing device to request a service from one or more of the service providers 104. Upon initialization, the user application 102 sends an availability request to the API 103-1 to check the availability of the service providers 104. The API 103-1 is a unified single interface that enables the user application 102 to connect with all the service provider 104 globally without requiring individual permissions and connections.

At step 402, the request is routed through a connection partner. In the present example, the API 103-1 maps and routes the availability request to the connection partner 103-2. As the connection partner 103-2 has established links with all the service providers 104, the API 103-1 simply needs to communicate the request to the connection partner 103-2.

At step 403, status updates from the service providers is obtained. In the present example, the connection partner 103-2 seeks and obtains status updates from the service providers 104 through their respective APIs. Preferably, the connection partner 103-2 seeks updates from the service providers 104 on regular intervals and may obtain a fresh update outside those intervals when it receives a request from the API 103-1 or other similar entities.

At step 404, access to a performance dashboard for the service providers is provided to regulators and premium clients. In the present example, the performance dashboard module 103-3 generates a performance dashboard based on the status updates and other information obtained by the connection partner 103-2 from the service providers 104. The module 103-3 analyses the data received from the connection partner 103-2 and generates the performance dashboard with real-time information and preferably updates it each time the connection partner 103-2 obtain fresh status updates. The regulators 105 and the premium clients 106 are provided access to the performance dashboard. In the present example, the user application 102 is hosted by a premium client and thus may already be aware of the availability status of the service providers 104 when the user 101 launches it. However, it is to be understood that if there are no regulators and premium clients, the step 404 may be omitted.

At step 405, the availability status of the service providers is sent to the unified application interface. In the present example, the connection partner 103-2 translates the status updates received from the service providers 104 into a standardized format and sends that to the API 103-1. The API 103-1 then sends the availability status of the service providers 104 to the user application 102. The API 103-1 may only inform the user application 102 of the service providers that are unavailable.

At step 406, a service request from a user is fulfilled through an available service provider. In the present example, the user application 102 shows a list of service providers 104 to the user 101 to choose from. The user application 102 may only show the service providers 104 that are available for service. Alternatively, the user application may show all the service providers 104 but mark the unavailable ones distinguishably. The user 101 then may choose an available service provider, say provider 104-1, and send a service request which is then routed through the connectivity hub 103. For example, the user 101 may choose Bank A (service provider 104-1) and request a transfer of funds to a friend's account. The user application 102 then connects with the connectivity hub 103 which communicates with the bank's API and passes the user request for the transfer of funds to the bank. The bank services the user request and sends an acknowledgment through the connectivity hub 103, which then passes it on to the user application 102.

In this way, it is possible to fulfil service requests with various service providers using a single interface. As the user application is informed of the availability status of the service provides prior to the user initiating a service request, chances of failure are minimized. Moreover, with the access to the performance dashboard, the regulators and premium clients can be well-informed and be more efficient in their respective operations.

It will be appreciated that any of the methods described herein, and any particular step of said methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of a method may be implemented by different processors that are all collectively acting in accordance with computer-readable instructions stored on one or more storage media. The processor or processors may be component(s) of system 100.

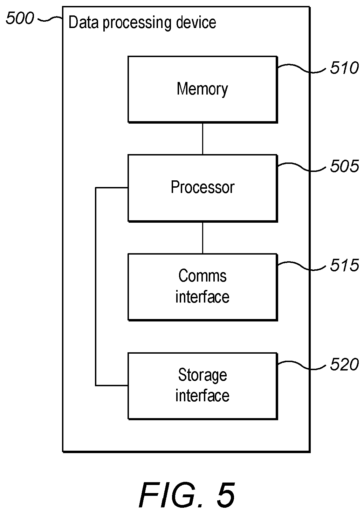

Equally, any steps of any of the methods described herein may be performed by data processing devices as described in respect of system 100 of Fig. 1. By way of example, Fig. 5 shows in schematic form a data processing device 500 that is suitable for performing the functions of the components in the connectivity hub 103.

Data processing device 500 includes a processor 505 for executing instructions. Instructions may be stored in a memory 510, for example. The processor 505 may include one or more processing units (e.g., in a multi-core configuration) for executing instructions. The instructions may be executed within a variety of different operating systems on the data processing device 500, such as UNIX, LINUX, Microsoft Windows^{®}, etc. More specifically, the instructions may cause various data manipulations on data stored in the memory 510 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

The processor 505 is operatively coupled to a communication interface 515 such that the data processing device 500 is capable of communicating with a remote device, such as another data processing device of the system 100. For example, the communication interface 515 may receive communications from another member of the system 100 over a wired or wireless channel, depending on the function of the data processing device 500 within the context of the system 100.

The processor 505 may also be operatively coupled to a storage device, depending on the function of the data processing device 500 within the context of the system 100. The storage device is any computer-operated hardware suitable for storing and/or retrieving data, where in the case of a secure storage medium the data is stored and retrieved securely.

Storage device can be integrated in the data processing device 500, or it can be external to the data processing device 500 and located remotely. For example, the data processing device 500 may include one or more hard disk drives as a storage device. Alternatively, where the storage device is external to the data processing device 500, it can comprise multiple storage units such as hard disks or solid state disks in a redundant array of inexpensive disks (RAID) configuration. The storage device may include a storage area network (SAN) and/or a network attached storage (NAS) system.

The processor 505 can be operatively coupled to the storage device via a storage interface 520. The storage interface 520 is any component capable of providing the processor 505 with access to the storage device. The storage interface 520 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the processor 505 with access to the storage device.

The memory 510 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible within the scope of aspects of the disclosure as defined in the appended claims. As various changes could be made in the above constructions, products, and methods within the scope of aspects of the disclosure, it is intended that all matter contained in the above description and shown in the accompanying drawings shall be interpreted as illustrative and not in a limiting sense.

As will be appreciated based on the foregoing specification, the above-described embodiments of the disclosure may be implemented using computer programming or engineering techniques including computer software, firmware, hardware or any combination or subset thereof. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A system for providing unified access to a plurality of service providers, the system comprising:
a user application configured to connect a user to the service providers for accessing one or more services, wherein the service providers are one or more of financial institutions, utility services, public services, retail merchants, travel services, social media platforms, regulated and unregulated third-party providers; and
a connectivity hub configured to enable the user application to obtain availability status of the service providers, wherein the connectivity hub is an interface between the user application and the service providers providing unified single access to the service providers and comprises an application interface configured to process a status request from the user application and route it to a connection partner, and the connection partner is configured to receive status updates from the service providers;
wherein the connection partner is further configured to send a status of the service providers to the application interface, and wherein the user application is configured to deactivate the service providers on a list that are currently unavailable based on the status received from the application interface.

2. The system of claim 1, wherein the connectivity hub further comprises a performance module configured to collate the status updates received from the service providers and generate an interactive performance dashboard.

3. The system of claim 2, wherein the performance dashboard comprises real-time availability and planned outages for the service providers.

4. The system of claim 3, wherein the performance dashboard comprises a list of locations sorted by aggregate availability of all service providers in respective locations.

5. The system of any of claims 2 to 4, wherein the connectivity hub is configured to provide access to the performance dashboard to premium clients and/or to regulators associated with one or more of the service providers.

6. A method of providing unified access to a plurality of service providers, the method comprising the steps of:
receiving a status request for service providers via an application interface of a connectivity hub that is an interface between a user interface of a user application and the plurality of service providers, the connectivity hub providing unified single access to the service providers, wherein the service providers are one or more of financial institutions, utility services, public services, retail merchants, travel services, social media platforms, regulated and unregulated third-party providers;
routing the request through a connection partner;
obtaining status updates from the service providers through the connection partner;
sending an availability status of the service providers through the application interface so as to allow a user to access a service from one or more of the available service providers;
identifying the service providers that are available for access; and
deactivating, by the user application, the service providers that are currently unavailable based on availability status of the service providers received from the application interface.

7. The method of claim 6, further comprising collating the status updates received from the service providers and generating an interactive performance dashboard.

8. The method of claim 7, further comprising providing access to the performance dashboard to premium clients and/or to regulators associated with the one or more service providers.

9. A connectivity hub for providing unified access to a plurality of service providers comprising:
a memory;
a communication interface; and
one or more processors for implementing the method of any of claim 6 to 8.

## Patentansprüche

1. System zum Bereitstellen von einheitlichem Zugang zu einer Vielzahl von Dienstanbietern, wobei das System Folgendes umfasst:
eine Benutzeranwendung, die so konfiguriert ist, dass sie einen Benutzer mit den Dienstanbietern verbindet, um auf einen oder mehrere Dienste Zugang zu erhalten, wobei die Dienstanbieter eines oder mehrerer sind von Finanzinstituten, Versorgungsdiensten, öffentlichen Diensten, Einzelhändlern, Reisediensten, Plattformen sozialer Medien, regulierten und nicht regulierten Drittanbietern; und
einen Konnektivitätshub, der so konfiguriert ist, dass er es der Benutzeranwendung ermöglicht, den Verfügbarkeitsstatus der Dienstanbieter zu erhalten, wobei der Konnektivitätshub eine Schnittstelle zwischen der Benutzeranwendung und den Dienstanbietern ist, die einheitlichen Einfachzugang zu den Dienstanbietern bereitstellt und eine Anwendungsschnittstelle umfasst, die so konfiguriert ist, dass sie eine Statusabfrage von der Benutzeranwendung verarbeitet und diese an einen Verbindungspartner weiterleitet, und wobei der Verbindungspartner so konfiguriert ist, dass er Statusaktualisierungen von den Dienstanbietern empfängt;
wobei der Verbindungspartner weiter so konfiguriert ist, dass er einen Status der Dienstanbieter an die Anwendungsschnittstelle sendet, und wobei die Benutzeranwendung so konfiguriert ist, dass sie die Dienstanbieter, die basierend auf dem von der Anwendungsschnittstelle empfangenen Status gegenwärtig nicht verfügbar sind, auf einer Liste deaktiviert.

2. System nach Anspruch 1, wobei der Konnektivitätshub weiter ein Leistungsmodul umfasst, das so konfiguriert ist, dass es die von den Dienstanbietern empfangenen Statusaktualisierungen abgleicht und ein interaktives Leistungsdashboard erstellt.

3. System nach Anspruch 2, wobei das Leistungsdashboard Echtzeit-Verfügbarkeit und geplante Betriebsunterbrechungen für die Dienstanbieter umfasst.

4. System nach Anspruch 3, wobei das Leistungsdashboard eine Liste von Standorten umfasst, die nach aggregierter Verfügbarkeit von allen Dienstanbietern an jeweiligen Standorten geordnet ist.

5. System nach einem der Ansprüche 2 bis 4, wobei der Konnektivitätshub so konfiguriert ist, dass er Zugang zu dem Leistungsdashboard für Premiumkunden und/oder Regulierungsstellen, die einem oder mehreren der Dienstanbieter zugeordnet sind, bereitstellt.

6. Verfahren zum Bereitstellen von einheitlichem Zugang zu einer Vielzahl von Dienstanbietern, wobei das Verfahren die folgenden Schritte umfasst:
Empfangen einer Statusabfrage für Dienstanbieter über eine Anwendungsschnittstelle eines Konnektivitätshubs, der eine Schnittstelle zwischen einer Benutzerschnittstelle einer Benutzeranwendung und der Vielzahl von Dienstanbietern ist, wobei der Konnektivitätshub einheitlichen einfachen Zugang zu den Dienstanbietern bereitstellt, wobei die Dienstanbieter eines oder mehrerer sind von Finanzinstituten, Versorgungsdiensten, öffentlichen Diensten, Einzelhändlern, Reisediensten, Plattformen sozialer Medien, regulierten und nicht regulierten Drittanbietern;
Weiterleiten der Abfrage durch einen Verbindungspartner;
Erhalten von Statusaktualisierungen von den Dienstanbietern durch den Verbindungspartner;
Senden eines Verfügbarkeitsstatus der Dienstanbieter durch die Anwendungsschnittstelle, um es so einem Benutzer zu ermöglichen, Zugang zu einem Dienst von einem oder mehreren der verfügbaren Dienstanbieter zu erhalten;
Identifizieren der Dienstanbieter, die für Zugang verfügbar sind; und
Deaktivieren durch die Benutzeranwendung der Dienstanbieter, die basierend auf einem von der Anwendungsschnittstelle empfangenen Verfügbarkeitsstatus der Dienstanbieter gegenwärtig nicht verfügbar sind.

7. Verfahren nach Anspruch 6, weiter umfassend Abgleichen der von den Dienstanbietern empfangenen Statusaktualisierungen und Erstellen eines interaktiven Leistungsdashboards.

8. Verfahren nach Anspruch 7, weiter umfassend Bereitstellen von Zugang zu dem Leistungsdashboard für Premiumkunden und/oder Regulierungsstellen, die dem einen oder den mehreren Dienstanbieter zugeordnet sind.

9. Konnektivitätshub zum Bereitstellen von einheitlichem Zugang zu einer Vielzahl von Dienstanbietern, umfassend:
einen Speicher;
eine Kommunikationsschnittstelle; und
einen oder mehrere Prozessoren zum Implementieren des Verfahrens nach einem der Ansprüche 6 bis 8.

## Revendications

1. Système pour fournir un accès unifié à une pluralité de fournisseurs de services, le système comprenant :
une application utilisateur configurée pour connecter un utilisateur aux fournisseurs de services pour accéder à un ou plusieurs services, dans lequel les fournisseurs de services sont un ou plusieurs parmi des institutions financières, des services collectifs, des services publics, des commerçants de détail, des services de voyage, des plateformes de médias sociaux, des fournisseurs tiers réglementés et non réglementés ; et
un hub de connectivité configuré pour permettre à l'application utilisateur d'obtenir un état de disponibilité des fournisseurs de services, dans lequel le hub de connectivité est une interface entre l'application utilisateur et les fournisseurs de services fournissant un accès unique unifié aux fournisseurs de services et comprend une interface d'application configurée pour traiter une demande d'état en provenance de l'application utilisateur et l'acheminer vers un partenaire de connexion, et le partenaire de connexion est configuré pour recevoir des mises à jour d'état en provenance des fournisseurs de services ;
dans lequel le partenaire de connexion est en outre configuré pour envoyer un état des fournisseurs de services à l'interface d'application, et dans lequel l'application utilisateur est configurée pour désactiver les fournisseurs de services présents sur une liste qui sont actuellement indisponibles sur la base de l'état reçu en provenance de l'interface d'application.

2. Système selon la revendication 1, dans lequel le hub de connectivité comprend en outre un module de performance configuré pour collationner les mises à jour d'état reçues en provenance des fournisseurs de services et générer un tableau de bord de performance interactif.

3. Système selon la revendication 2, dans lequel le tableau de bord de performance comprend une disponibilité en temps réel et des interruptions planifiées pour les fournisseurs de services.

4. Système selon la revendication 3, dans lequel le tableau de bord de performance comprend une liste d'emplacements triés selon la disponibilité agrégée de tous les fournisseurs de services dans des emplacements respectifs.

5. Système selon l'une quelconque des revendications 2 à 4, dans lequel le hub de connectivité est configuré pour fournir un accès au tableau de bord de performance à des clients premium et/ou à des autorités de régulation associées à un ou plusieurs des fournisseurs de services.

6. Procédé de fourniture d'accès unifié à une pluralité de fournisseurs de services, le procédé comprenant les étapes de :
réception d'une demande d'état pour des fournisseurs de services par le biais d'une interface d'application d'un hub de connectivité qui est une interface entre une interface utilisateur d'une application utilisateur et la pluralité de fournisseurs de services, le hub de connectivité fournissant un accès unique unifié aux fournisseurs de services, dans lequel les fournisseurs de services sont un ou plusieurs parmi des institutions financières, des services collectifs, des services publics, des commerçants de détail, des services de voyage, des plateformes de médias sociaux, des fournisseurs tiers réglementés et non réglementés ;
acheminement de la demande par l'intermédiaire d'un partenaire de connexion ;
obtention de mises à jour d'état en provenance des fournisseurs de services par l'intermédiaire du partenaire de connexion ;
envoi d'un état de disponibilité des fournisseurs de services par l'intermédiaire de l'interface d'application de façon à permettre à un utilisateur d'accéder à un service en provenance d'un ou de plusieurs des fournisseurs de services disponibles ;
identification des fournisseurs de services qui sont disponibles pour un accès ; et
désactivation, par l'application utilisateur, des fournisseurs de services qui sont actuellement indisponibles sur la base d'un état de disponibilité des fournisseurs de services reçu en provenance de l'interface d'application.

7. Procédé selon la revendication 6, comprenant en outre le collationnement des mises à jour d'état reçues en provenance des fournisseurs de services et la génération d'un tableau de bord de performance interactif.

8. Procédé selon la revendication 7, comprenant en outre la fourniture d'accès au tableau de bord de performance à des clients premium et/ou à des autorités de régulation associées aux un ou plusieurs fournisseurs de services.

9. Hub de connectivité pour fournir un accès unifié à une pluralité de fournisseurs de services comprenant :
une mémoire ;
une interface de communication ; et
un ou plusieurs processeurs pour mettre en œuvre le procédé selon l'une quelconque des revendications 6 à 8.
